(19) Europäisches Patentamt
European Patent Office
Office européen des brevets

(11) **EP 3 674 753 B1**

(12) **FASCICULE DE BREVET EUROPEEN**

(45) Date de publication et mention
de la délivrance du brevet:
**06.10.2021   Bulletin 2021/40**

(51) Int Cl.:
***G01T 7/00*** (2006.01)

(21) Numéro de dépôt: **19219532.9**

(22) Date de dépôt: **23.12.2019**

(54) **PROCÉDÉ DE CALIBRATION D'UN DÉTECTEUR SPECTROMÉTRIQUE**

VERFAHREN ZUR KALIBRIERUNG EINES SPEKTROMETER-DETEKTORS

METHOD FOR CALIBRATING A SPECTROMETRY DETECTOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.12.2018   FR 1874152**

(43) Date de publication de la demande:
**01.07.2020   Bulletin 2020/27**

(73) Titulaire: **Commissariat à l'énergie atomique et aux énergies alternatives
75015 Paris (FR)**

(72) Inventeur: **BRAMBILLA, Andréa
38054 GRENOBLE cedex 09 (FR)**

(74) Mandataire: **Le Goaller, Christophe
Innovation Competence Group
310 avenue Berthelot
69372 Lyon Cedex 08 (FR)**

(56) Documents cités:
**WO-A1-2016/102404     US-A1- 2018 011 221**

- **C. DE CESARE ET AL: "An FPGA-based algorithm to correct the instability of high-resolution and high-flux X-ray spectroscopic imaging detectors", JOURNAL OF INSTRUMENTATION, vol. 13, no. 08, 28 août 2018 (2018-08-28) , pages P08022-P08022, XP055618412, DOI: 10.1088/1748-0221/13/08/P08022**
- **PALACZ M ET AL: "A new method of shift and gain correction for arbitrary spectra", NUCLEAR INSTRUMENTS & METHODS IN PHYSICS RESEARCH. SECTION A, ELSEVIER BV * NORTH-HOLLAND, NL, vol. 383, no. 2, 11 décembre 1996 (1996-12-11), pages 473-479, XP004016211, ISSN: 0168-9002, DOI: 10.1016/S0168-9002(96)00756-5**

EP 3 674 753 B1

**Description**

## DOMAINE TECHNIQUE

Le domaine technique de l'invention est la spectrométrie appliquée à la détection de rayonnements ionisants. Il s'agit essentiellement de spectrométrie X ou y.

## ART ANTERIEUR

La caractérisation d'un objet par irradiation à l'aide d'un rayonnement électromagnétique ionisant, par exemple un rayonnement X ou gamma, est largement répandue. Une telle caractérisation peut être réalisée à des fins de diagnostic médical, de contrôle non destructif dans le domaine industriel, ou encore pour la détection de matériaux dangereux ou illicites, par exemple dans des portiques de contrôle d'individus, de type portiques d'aéroport, ou dans le contrôle de bagages. Durant ce type de caractérisation, une source d'irradiation émet un rayonnement d'irradiation se propageant vers un objet. Un détecteur détecte un rayonnement transmis par l'objet, c'est-à-dire un rayonnement émis par la source et s'étant propagé à travers l'objet. La caractérisation de l'objet peut notamment être effectuée à partir d'un ou plusieurs spectres d'un rayonnement transmis ou diffusé par l'objet. D'autres procédés sont basés sur la détection d'un rayonnement diffusé ou rétrodiffusé par l'objet.

Pour ce type de caractérisation, il est usuel d'utiliser des détecteurs pixelisés, spatialement et résolus en énergie (i-e spectralement résolus). Les pixels peuvent s'étendre selon une dimension, par exemple selon une ligne. Ils peuvent également s'étendre selon une matrice bidimensionnelle. Chaque pixel forme un détecteur spectrométrique élémentaire, permettant l'acquisition du spectre d'un rayonnement transmis ou diffusé par l'objet. Ce spectre comporte plusieurs canaux, chaque canal étant représentatif d'une bande d'énergie. Un tel spectre peut comporter des dizaines voire des centaines de canaux. Lorsque les détecteurs s'étendent selon deux dimensions, notamment selon une matrice, cela permet de former une image spectrale du spectre du rayonnement transmis par l'objet. Par image spectrale, on entend une image dans différents canaux d'énergie. Une image spectrale est formée par la juxtaposition de différents pixels. A chaque pixel est associé un spectre du rayonnement transmis par l'objet. Ce spectre comporte plusieurs canaux, chaque canal étant représentatif d'une bande d'énergie. Un tel spectre peut comporter des dizaines voire des centaines de canaux. Chaque pixel d'un détecteur pixellisé forme un détecteur spectrométrique.

Un exemple d'utilisation de tels détecteurs ont par exemple été décrits dans EP3385757 ou dans EP3185003.

L'invention décrite ci-dessous est un procédé permettant d'effectuer simplement et automatiquement une calibration d'un détecteur spectrométrique, en tenant notamment compte de la variation, dans le temps, de la réponse du détecteur.

Chaque détecteur spectrométrique, formant un pixel du détecteur pixélisé, doit faire l'objet d'une calibration en énergie, de façon à déterminer la bande d'énergie correspondant à chaque canal du spectre. Un exemple est décrit dans De Cesare C et Al "An FPGA-based algorithm to correct the instability of high-resolution and high-flux X-ray spectroscopic imaging detectors", Journal of instrumentation, vol. 13, n° 08, 28 august 2018.

L'invention décrite ci-dessous permet d'affiner simplement et automatiquement une telle calibration en énergie, en prenant notamment en compte la variation, dans le temps, de la réponse du détecteur

L'invention peut être appliquée à un seul détecteur spectrométrique. Elle peut également être simultanément appliquée à l'ensemble des détecteurs spectrométriques formant un même détecteur pixélisé. Cela permet d'effectuer une calibration fiable et rapide, tout en ne nécessitant pas de moyens complexes.

## EXPOSE DE L'INVENTION

Un premier objet de l'invention est un procédé de calibration d'un détecteur spectrométrique, le détecteur spectrométrique étant configuré pour :

- détecter des interactions d'un rayonnement ionisant dans un matériau de détection durant une durée d'acquisition ;
- acquérir un spectre d'amplitude correspondant à un histogramme d'amplitudes d'impulsions détectées lors des interactions ;
  le détecteur spectrométrique fonctionnant selon un mode instable, durant une période temporelle d'instabilité suivant une mise sous tension du matériau de détection, puis tendant progressivement vers un mode de fonctionnement stable ; le procédé comportant l'étape suivante :

  a) exposition du détecteur à un rayonnement de calibration, et acquisition d'un spectre d'amplitude de calibration, le détecteur étant considéré comme fonctionnant selon le mode instable, le spectre de calibration s'étendant selon plusieurs canaux, à chaque canal correspondant une valeur d'amplitude ;

le procédé étant caractérisé en ce qu'il comprend en outre les étapes suivantes :

b) prise en compte d'un spectre de référence, représentatif d'un spectre mesuré par le détecteur lorsqu'il est exposé au rayonnement de calibration, le détecteur étant considéré comme fonctionnant selon le mode stable ;
c) détermination d'une fonction de calibration, destinée à être appliquée à la valeur des canaux du spectre de calibration, à partir d'une comparaison entre :

- le spectre de référence pris en compte lors de l'étape b) ;
- un spectre de calibration recalé, obtenu en appliquant la fonction de calibration à la valeur des canaux du spectre d'amplitude de calibration, éventuellement pondéré par un terme de pondération strictement positif ;

la fonction de calibration minimisant un écart, ou un écart quadratique, entre le spectre de référence et le spectre de calibration recalé.

Le terme de pondération peut tenir compte d'une différence de nombres d'impulsions respectivement prises en compte dans le spectre de référence et dans le spectre de calibration recalé. Il peut également prendre en compte une différence de durées d'acquisitions entre le spectre de référence et le spectre de calibration. Il peut également tenir compte du changement de variable.

Le spectre de calibration recalé est obtenu en attribuant, à chaque canal du spectre de calibration, une nouvelle valeur, en appliquant la fonction de calibration respectivement à chaque valeur des canaux du spectre de calibration.

La fonction de calibration peut notamment être paramétrique, en étant définie par un ensemble de paramètres, au moins un paramètre étant déterminé par la minimisation de la comparaison effectuée lors de l'étape c).

D'une façon plus générale, lors de l'étape c), la fonction de calibration est obtenue par une comparaison entre le spectre de référence et le spectre de calibration recalé, la fonction de calibration faisant tendre le spectre de calibration recalé vers le spectre de référence.

Selon un premier mode de réalisation, lors de l'étape b), le spectre de référence est un spectre d'amplitude, formant un spectre d'amplitude de référence, chaque canal du spectre d'amplitude de référence étant assigné à une valeur d'amplitude d'une impulsion détectée par le détecteur, exposé au rayonnement de calibration, le spectre de d'amplitude référence étant soit mesuré, soit modélisé.

Lors de l'étape d), le procédé peut comprendre une étape e) comportant :

- utilisation de la fonction de calibration mise à jour lors de l'étape c) et du spectre d'amplitude de calibration pour établir un spectre d'amplitude de calibration recalé ;
- correction du spectre d'amplitude mesuré à partir du spectre d'amplitude de calibration recalé et du spectre d'amplitude de référence.

Selon un deuxième mode de réalisation, lors de l'étape b), le spectre de référence est un spectre d'énergie, formant un spectre d'énergie de référence, chaque canal du spectre d'énergie de référence étant assigné à une valeur d'énergie correspondant à une impulsion détectée par le détecteur, exposé au rayonnement de calibration, le spectre d'énergie de référence étant soit mesuré, soit modélisé.

Lors de l'étape b), le spectre d'énergie de référence peut être obtenu en appliquant une fonction de calibration de référence à un spectre d'amplitude de référence, la fonction de calibration de référence définissant une relation entre l'amplitude de chaque impulsion détectée par le détecteur et une valeur d'énergie, la fonction de calibration de référence, permettant de passer du spectre d'amplitude de référence à un spectre d'énergie de référence. Le spectre d'amplitude de référence est soit mesuré, soit modélisé. Lors de l'étape c), le spectre de calibration recalé est alors un spectre d'énergie de calibration.

Le spectre d'énergie de référence peut également être issu d'une modélisation, la modélisation définissant également une fonction de calibration de référence, définissant une relation entre l'amplitude de chaque impulsion détectée par le détecteur et une valeur d'énergie. Lors de l'étape c), le spectre de calibration recalé est alors un spectre d'énergie de calibration.

La fonction de calibration de référence peut notamment être une fonction paramétrique, définie par un ensemble de paramètres de référence comportant au moins un paramètre de référence. Selon une possibilité, lors de l'étape c), le spectre d'amplitude calibration est recalé à l'aide de la fonction de calibration de référence, en pondérant au moins un paramètre de référence, voire tous les paramètres de référence, par un coefficient de dérive. L'étape c) comporte alors une détermination du coefficient de dérive, résultant de la comparaison.

La fonction de calibration de référence peut être une fonction linéaire ou polynomiale.

Le spectre d'amplitude de référence peut être un spectre acquis par le détecteur en exposant ce dernier au rayonnement de calibration, le détecteur étant considéré comme en mode stable lors de l'exposition.

Le procédé peut comporter une étape d) comportant :

- une exposition du détecteur à un rayonnement de mesure;
- une acquisition d'un spectre d'amplitude du rayonnement de mesure ;
- un recalage du spectre d'amplitude, en utilisant la fonction de calibration déterminée lors de l'étape c), pour former un spectre d'amplitude recalé.

Le rayonnement de mesure peut notamment être un rayonnement atteignant le détecteur après avoir été diffusé par l'objet ou après s'être propagé à travers l'objet.

Lors de l'étape d), le spectre d'amplitude recalé peut être un spectre d'énergie mesuré, le procédé comprenant une étape e) comportant :

- utilisation de la fonction de calibration mise à jour lors de l'étape c) et du spectre d'amplitude de calibration pour établir un spectre d'énergie de calibration ;
- correction du spectre d'énergie mesuré à partir du spectre d'énergie de calibration et du spectre d'énergie de référence.

La correction peut être réalisée en multipliant, à chaque énergie, le contenu de chaque canal du spectre d'énergie mesuré par un ratio entre les contenus respectifs du spectre d'énergie de calibration et du spectre d'énergie de référence.

Selon un mode de réalisation, le procédé comporte :

- une exposition du détecteur à un rayonnement de mesure;
- une acquisition d'un spectre d'amplitude du rayonnement de mesure ;

de telle sorte que durant l'acquisition du spectre d'amplitude, le matériau de détection est mis sous tension par une tension de polarisation, ajustée en fonction du coefficient de dérive.

Un autre objet de l'invention est un dispositif de caractérisation d'un objet comportant :

- une source d'irradiation, configurée pour émettre un rayonnement électromagnétique ionisant ;
- un détecteur, configuré pour détecter un rayonnement électromagnétique ionisant ayant été diffusé par l'objet ou s'étant propagé à travers l'objet, et à former un spectre du rayonnement détecté ;
- un processeur, configuré pour recevoir les spectres formés par le détecteur et pour mettre en oeuvre les étapes b) et c) d'un procédé selon le premier objet de l'invention.

Le dispositif peut comporter une pluralité de détecteurs formant un détecteur pixelisé, le processeur étant configuré pour mettre en œuvre simultanément, pour tout ou partie des détecteurs, les étapes b) et c).

Le processeur peut être configuré pour mettre en œuvre les étapes d), ou d) et e) du procédé selon le premier objet de l'invention.

D'autres avantages et caractéristiques ressortiront plus clairement de la description qui va suivre de modes particuliers de réalisation de l'invention, donnés à titre d'exemples non limitatifs, et représentés sur les figures listées ci-dessous.

## FIGURES

La figure 1A représente un exemple de dispositif selon l'invention.

La figure 1B est un spectre d'amplitude, représentant le nombre d'impulsions détectées par canal, en fonction de l'amplitude desdites impulsions.

La figure 1C est un spectre d'énergie, obtenu en effectuant un changement de variable, à partir du spectre d'amplitude représenté sur la figure 1B, selon une fonction de calibration. Le spectre d'énergie représente un nombre d'impulsions détectées par canal, à chaque canal correspondant une bande d'énergie.

La figure 2A est montre différents spectres d'amplitude acquis à différents instants suivant une mise sous tension d'un détecteur.

La figure 2B est un détail de la figure 2A.

La figure 2C est un ratio obtenu, pour chaque énergie, entre chaque spectre d'amplitude représenté sur la figure 2A et un spectre d'amplitude considéré comme un spectre d'amplitude de de référence.

La figure 3A montre les principales étapes d'un procédé selon l'invention.

La figure 3B représente le dispositif représenté sur la figure 1A, dans une configuration de calibration.

La figure 3C montre un spectre d'amplitude de référence.

La figure 3D montre le spectre d'amplitude de référence, représenté sur la figure 3C, et un spectre d'amplitude de calibration, obtenu dans une configuration de calibration.

La figure 3E montre un spectre d'énergie de référence.

La figure 3F montre le spectre d'énergie de référence, représenté sur la figure 3E, et un spectre d'énergie de calibration, obtenu en appliquant une fonction de calibration mise à jour au spectre d'amplitude de calibration représenté sur la figure 3D.

La figure 3G montre une fonction de correction spectrale.

La figure 4A est un exemple montrant un spectre d'amplitude de référence et un spectre d'amplitude de calibration.

La figure 4B est un exemple montrant un spectre d'énergie de référence et un spectre d'énergie de calibration.

La figure 5A illustre une matrice de réponse d'un détecteur.

La figure 5B montre un spectre d'énergie d'un rayonnement incident au détecteur.

La figure 5C montre un spectre d'énergie détecté par le détecteur.

## EXPOSE DE MODES DE REALISATION PARTICULIERS

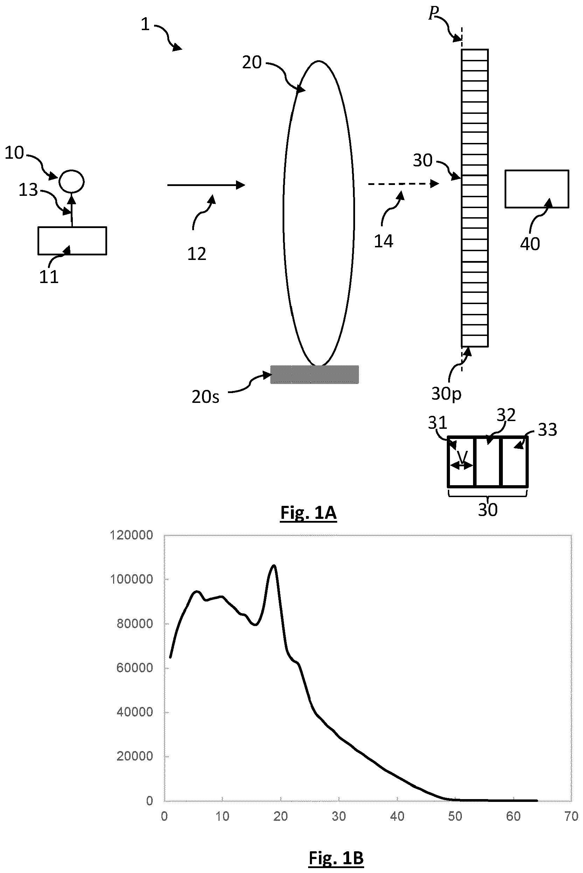

On a représenté, sur la figure 1A, un dispositif 1 de caractérisation d'un objet 20 permettant une mise en œuvre de l'invention. Sur chacune de ces figures, le dispositif 1 comporte une source d'irradiation 10 et un détecteur pixelisé 30p. Le dispositif comporte également un support 20s, configuré pour recevoir un objet, de telle sorte que lorsque l'objet 20 est disposé sur le support 20s, il est interposé entre la source d'irradiation 10 et le détecteur pixelisé 30p.

La source d'irradiation 10 est configurée pour émettre un rayonnement électromagnétique ionisant 12, dit rayonnement incident, vers l'objet 20, ce dernier étant interposé entre la source d'irradiation 10 et le détecteur pixelisé 30p. Le détecteur pixelisé 30p comporte des détecteurs élémentaires 30 prenant la forme de pixels agencés selon un plan de détection P. Le détecteur pixelisé 30p comporte p pixels 30, où p est un entier naturel. Les pixels peuvent s'étendre selon une ligne, mais en général, ils s'étendent selon une matrice régulière bidimensionnelle. Dans la suite de la description, un détecteur 30 désigne un des pixels du détecteur pixelisé 30p.

Dans l'exemple représenté sur la figure 1A, la source d'irradiation 10 est configurée pour être activée à l'aide d'une alimentation électrique 11. L'alimentation 11 adresse un courant électrique d'alimentation 13 pour alimenter la source d'irradiation 10. De façon usuelle, la source d'irradiation est un tube générateur de rayons X, dont l'anode est soumise à une tension de polarisation HT dépendant du courant d'alimentation 13. La tension de polarisation HT détermine la bande spectrale d'énergie des rayons X émis par la source d'irradiation. L'intensité du courant d'alimentation 13 conditionne l'intensité du rayonnement X émis par la source, c'est-à-dire la quantité de rayons X émise par unité de temps. La source d'irradiation 10 émet le rayonnement incident 12 selon une bande spectrale d'énergie s'étendant généralement selon plusieurs dizaines voire centaines de keV.

La bande spectrale d'énergie du rayonnement émis par la source peut être discrétisée en différents canaux d'énergie, ou bandes d'énergies, le terme bande d'énergie correspondant à l'acronyme anglais "energy bin".

L'objet 20 peut être un tissu biologique vivant, par exemple une partie du corps d'un animal ou d'un être humain. Le dispositif 1 est alors un dispositif d'imagerie médicale ou un portique de contrôle d'aéroport. L'objet peut également être une pièce industrielle ou un bagage, le dispositif étant alors utilisé à des fins de contrôle non destructif.

Le terme rayonnement électromagnétique ionisant désigne un rayonnement électromagnétique constitué de photons d'énergie supérieure à 1 keV, et de préférence inférieure à 5 MeV. La plage d'énergie du rayonnement ionisant peut être comprise entre 1 keV et 2 MeV, mais elle s'étend le plus souvent entre 1 keV et 150 keV ou 300 keV. Le rayonnement ionisant peut être un rayonnement X ou y.

L'objet 20, irradié par le rayonnement incident 12, transmet à chaque pixel 30 un rayonnement 14, dit rayonnement transmis, ou rayonnement atténué par l'objet 20. Chaque pixel 30 est un détecteur spectrométrique comportant :

- un matériau de détection 31, apte à interagir avec les photons (ou autres types de particules) du rayonnement incident au détecteur. Le matériau détecteur peut être de type scintillateur ou, de préférence, un matériau semi-conducteur compatible avec une utilisation à la température ambiante, de type CdTe, CdZnTe ; les photons formant le rayonnement incident forment des interactions dans le matériau de détection. Le matériau de détection est soumis à une tension de polarisation V. Chaque interaction génère des porteurs de charges, lesquels sont collectés par une électrode, généralement une anode.
- un circuit électronique 32, configuré pour générer une impulsion dont l'amplitude A dépend, et est de préférence proportionnelle, à la quantité de charge collectée lors d'une interaction. Cette quantité de charge correspond à l'énergie déposée par le rayonnement au cours de l'interaction ;
- un circuit de spectrométrie 33, disposé en aval du circuit électronique, qui permet de rassembler l'ensemble des impulsions formées, chaque impulsion correspondant à une interaction du rayonnement incident dans le matériau de détection. Le circuit de spectrométrie classe alors les impulsions en fonction de leur amplitude $A$, pour fournir un histogramme comportant le nombre d'impulsions détectées en fonction de leur amplitude. Cet histogramme est appelé spectre en amplitude $S_A$. Il est usuellement obtenu en utilisant un analyseur multicanaux.

La figure 1B représente un exemple de spectre en amplitude obtenu en exposant un détecteur 30, utilisant un matériau de détection en CdTe, à une source d'irradiation 10 de type tube à rayon X porté à une tension d'alimentation HT de 120 kV, sans objet entre la source d'irradiation et le détecteur. Le détecteur 30 est directement exposé à la source d'irradiation 10. Sur la figure 1B, l'axe des abscisses correspond à des numéros de canaux d'amplitude i, à chaque canal correspondant une valeur d'amplitude $A_i$, et l'axe des ordonnées correspond au nombre d'impulsions détectées par chaque canal d'amplitude. Le nombre d'impulsions affectées à chaque canal d'amplitude est le contenu de chaque canal. Le nombre d'impulsions est usuellement désigné "nombre de coups". Il peut être normalisé par la durée d'acquisition du spectre, auquel cas le contenu de chaque canal correspond à un taux de comptage. Le spectre représenté sur la figure 1B est usuellement désigné spectre plein flux, du fait de l'exposition directe du détecteur 30 à la source d'irradiation 10.

Le dispositif de caractérisation 1 comporte également une unité de traitement 40 permettant la mise en œuvre des opérations de traitement décrites ci-après. L'unité de traitement 40 peut comprendre un microprocesseur et/ou des microcontrôleurs électroniques. Elle comporte une mémoire, dans laquelle sont stockées certaines données décrites par la suite.

Sous l'effet de l'irradiation par le rayonnement incident 12, l'objet 20 transmet un rayonnement 14, dit rayonnement transmis, vers chaque détecteur 30. Chaque détecteur 30 forme un spectre en amplitude $S_A$ du rayonnement transmis 14.

Cependant, durant les instants suivant la mise sous tension du détecteur, la réponse du détecteur peut fluctuer. Par mise sous tension, on entend l'instant auquel le matériau de détection est mis sous tension, selon une tension de polarisation V. Pour une même interaction se produisant dans le détecteur, l'impulsion formée par le détecteur fluctue, en particulier son amplitude. Plus précisément, après la mise sous tension du détecteur, l'amplitude d'une impulsion, correspondant à une même énergie, augmente progressivement, jusqu'à se stabiliser. Ainsi, le détecteur comporte un mode de fonctionnement instable, au cours duquel pour une même interaction, l'amplitude d'une impulsion n'est pas stable dans le temps et croît progressivement. Le fonctionnement du détecteur se stabilise peu à peu pour atteindre un mode de fonctionnement stable. Le mode de fonctionnement instable peut notamment être dû à des effets de charge d'espace dans le matériau de détection, suite à sa mise sous tension, qui affectent les amplitudes des impulsions détectées. Avec le temps, ces effets s'atténuent progressivement, et la réponse du détecteur se stabilise. La durée du mode instable dépend du volume de chaque matériau de détection et de la tension de polarisation. Elle peut cependant s'étendre selon une ou deux heures, voire davantage. Cela nécessite une correction de la réponse du détecteur durant le mode de fonctionnement instable.

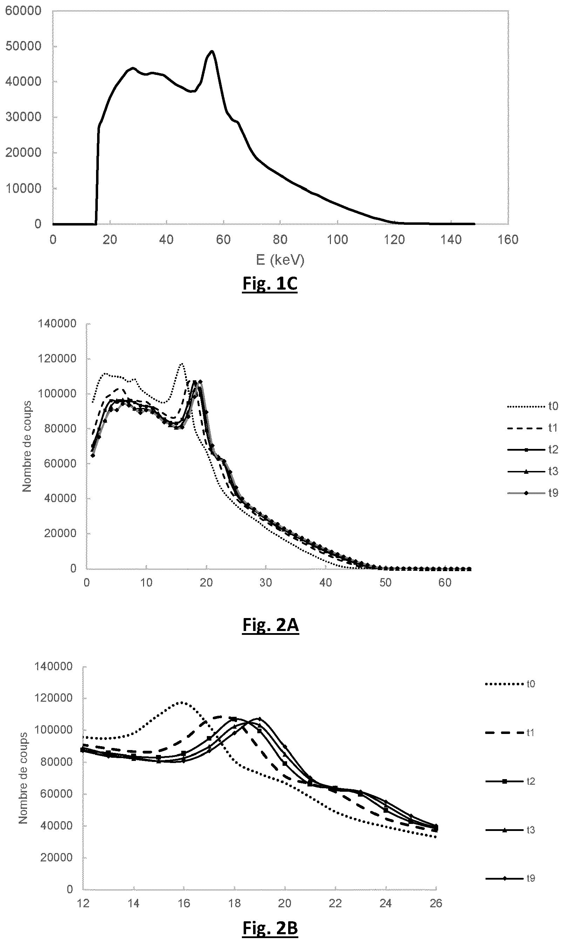

Les figures 2A et 2B illustrent une telle instabilité. Sur la figure 2A, on a représenté des spectres d'amplitude plein flux, acquis par un détecteur, dans des conditions similaires au spectre représenté sur la figure 1B. Les spectres représentés sur la figure 2A ont été acquis respectivement lors de la mise sous tension du détecteur (instant t0), puis à différents instants t1, t2, t3 et t9 après la mise sous tension. Les instants t1, t2, t3 et t9 correspondent respectivement à des durées de 12 minutes, 24 minutes, 36 minutes et 108 minutes après la mise sous tension. La figure 2B correspond à un détail de la figure 2A, s'étendant entre les canaux de valeurs 12 et 26.

On observe un décalage progressif du spectre vers les canaux d'amplitude élevés. Cela correspond à une évolution d'un gain de conversion du détecteur. Le gain de conversion traduit le nombre de charges collectées pour une interaction libérant une même quantité d'énergie dans le matériau de détection. Du fait de l'évolution du gain de conversion, les amplitudes respectives des impulsions correspondant à une même énergie augmentent progressivement, en particulier dans les premières minutes ou dizaines de minutes suivant la mise sous tension du détecteur. Il en résulte un décalage progressif du spectre d'amplitude vers les canaux de valeurs élevées. L'évolution du gain de conversion tend cependant à se stabiliser à partir d'une durée de stabilisation, cette dernière pouvant être par exemple de 1h à 2h. La stabilisation progressive peut être observée sur les figures 2A et 2B, le spectre correspondant au temps t3, mesuré 36 minutes après la mise en œuvre étant relativement proche du spectre correspondant au temps t9, obtenu 108 minutes après la mise en œuvre du détecteur. En même temps, la répartition du nombre de coups, dans les différents canaux d'énergie, varie aussi avec le temps.

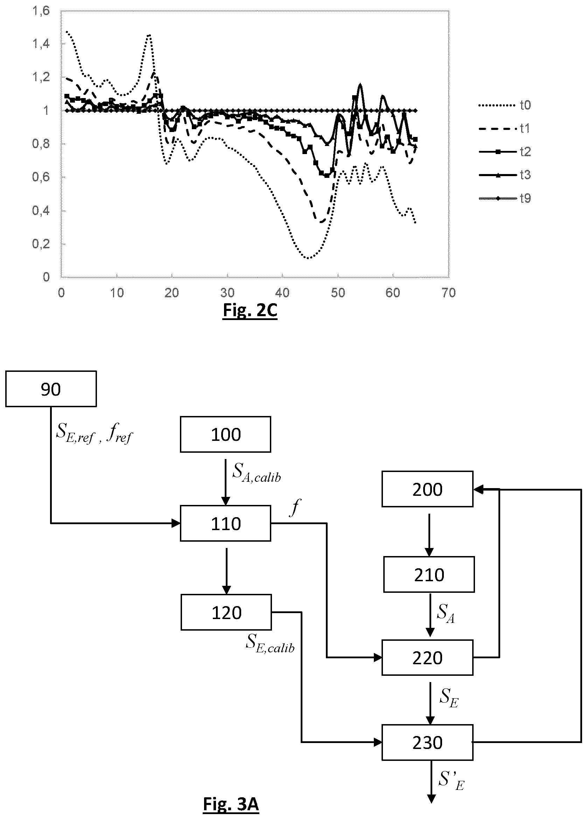

Outre le décalage spectral précédemment décrit, on a également constaté une déformation spectrale. La déformation spectrale correspond à une évolution de la distribution des impulsions dans les différents canaux d'énergie. Cette déformation est visible sur la figure 2C, sur laquelle on a représenté un ratio chaque spectre d'amplitude représenté sur la figure 2A avec un spectre acquis à un instant t10, 120 minutes après la mise sous tension du détecteur. L'axe des ordonnées représente un ratio, dans chaque canal d'amplitude, entre la valeur du canal issu d'un spectre respectivement acquis aux instants t0, t1, t2, t3, t9 et la valeur du canal du spectre acquis à l'instant t10. On observe une déformation significative des spectres acquis aux premiers instants t0, t1, t2, par rapport au spectre acquis à l'instant t10, ce dernier étant considéré comme représentatif d'un fonctionnement stabilisé du détecteur.

L'inventeur a défini un procédé innovant permettant de corriger l'instabilité du gain de conversion du détecteur. La figure 3A représente les principales étapes d'un procédé selon l'invention, permettant de prendre en compte l'instabilité du détecteur durant les premières heures de fonctionnement. Ce procédé peut être appliqué à un seul détecteur spectrométrique ou, simultanément, à différents détecteurs spectrométriques formant un détecteur pixelisé.

L'inventeur a notamment envisagé deux modes de réalisation, respectivement basés sur la prise en compte d'un spectre d'amplitude de référence et sur la prise en compte d'un spectre d'énergie de référence

Premier mode de réalisation

On décrit à présent un premier mode de réalisation, qui consiste à obtenir une fonction de calibration permettant un recalage de spectres en amplitude

Etape 90 : Etablissement d'un spectre d'amplitude de référence.

On prend en compte, au cours d'une étape 90, un spectre en amplitude considéré comme représentatif d'un fonctionnement stable du détecteur. Ce spectre d'amplitude est appelé spectre d'amplitude de référence $S_{A,ref}$.

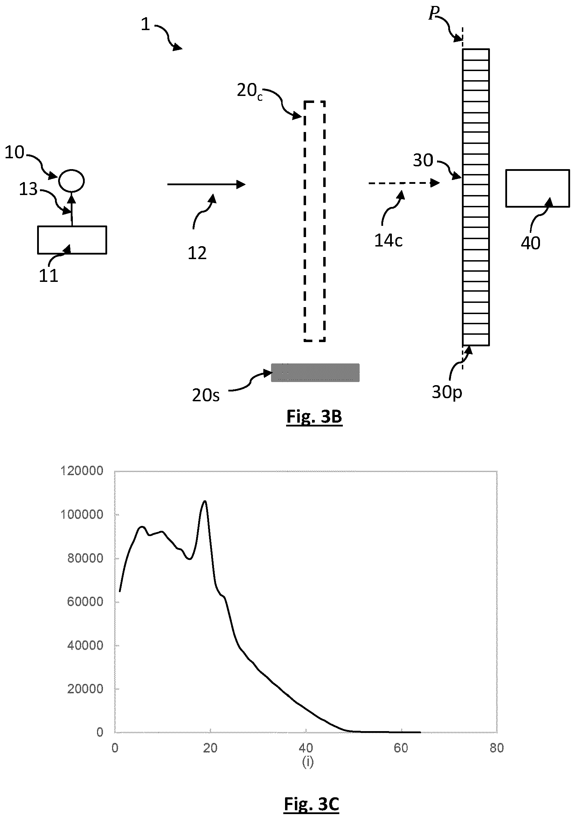

Le spectre d'amplitude de référence $S_{A,ref}$ est un spectre que l'on peut aisément obtenir, en exposant le détecteur à un rayonnement de calibration14c. Il peut s'agir d'un spectre plein flux, le détecteur étant directement exposé à la source d'irradiation. Le rayonnement de calibration 14c correspond alors au rayonnement 12 émis par la source. Il peut également s'agir d'un spectre réalisé en disposant un objet de calibration 20c entre la source et le détecteur. L'objet de calibration 20c peut par exemple être un écran dont, de préférence, on connaît le matériau et l'épaisseur. Le rayonnement de calibration 14c est alors le rayonnement transmis par l'objet de calibration 20c. Précisons qu'il n'est pas nécessaire que la composition de l'objet de calibration soit connue. La figure 3B représente une configuration d'acquisition du spectre de référence. L'objet de calibration $20_c$ est représenté en pointillés car il est optionnel.

L'étape 90 peut être effectuée au cours d'une phase préliminaire d'essai du détecteur, ou d'une phase d'utilisation prolongée du détecteur, au cours de laquelle on considère que le détecteur fonctionne selon le mode stable.

Le spectre d'amplitude de référence $S_{A,ref}$ peut également être obtenu par une modélisation de la réponse du détecteur.

La figure 3C montre un exemple de spectre d'amplitude de référence $S_{A,ref}$, l'axe des abscisses représentant des canaux.

Etape 100 : Acquisition d'un spectre d'amplitude de calibration

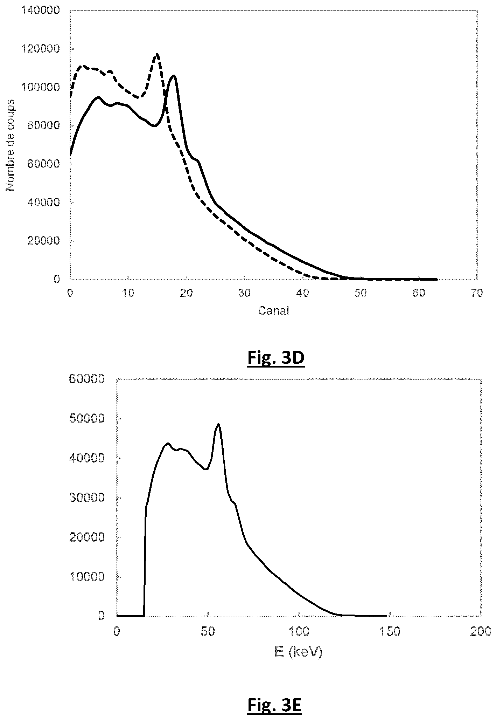

Au cours de cette étape, on procède à une acquisition d'un spectre d'amplitude de calibration $S_{A,calib}$ en se plaçant dans la configuration correspondant à l'obtention du spectre d'amplitude référence $S_{A,ref}$. Durant l'acquisition du spectre d'amplitude de calibration, le détecteur est exposé au rayonnement de calibration 14c. Lorsqu'un objet de calibration a été utilisé pour former le spectre de référence, le même objet de calibration est utilisé lors de l'acquisition du spectre de calibration. Lorsque le spectre d'amplitude de référence $S_{A,ref}$ correspond à une configuration de plein flux, le spectre d'amplitude de calibration $S_{A,calib}$ est également acquis selon la même configuration. De même, les paramètres d'alimentation électrique de la source de rayon X doivent être inchangés. De préférence, les durées d'acquisition du spectre d'amplitude de calibration et du spectre de référence sont identiques. A défaut, le spectre d'amplitude de calibration $S_{A,calib}$ et le spectre de référence $S_{A,ref}$ sont normalisés par leurs durées d'acquisition respectives. La figure 3D montre le spectre d'amplitude de référence $S_{A,ref}$ en trait plein, ainsi que le spectre d'amplitude de calibration $S_{A,calib}$ en pointillés.

Etape 110 : Détermination d'une fonction de calibration.

Au cours de cette étape, on détermine une fonction de calibration, de telle sorte qu'en étant appliquée au spectre d'amplitude de calibration $S_{A,calib}$, on minimise l'écart entre le spectre d'amplitude de calibration et le spectre d'amplitude de référence $S_{A,ref}$. Autrement dit, le spectre d'amplitude de calibration $S_{A,calib}$, recalé par la fonction de calibration $f$, se rapproche le plus possible du spectre d'amplitude de référence $S_{A,ref}$, à un facteur de normalisation près.

La fonction de calibration permet d'effectuer un changement de variable au niveau de la valeur i assignée à chaque canal d'amplitude, de telle sorte que le spectre d'amplitude de calibration $S'_{A,calib}$ recalé soit tel que :

$$S'_{A,calib}\big(f(i)\big) = N(i)S_{A,calib}(i) \quad (1)$$

Où $N(i)$ est un terme de normalisation affecté à chaque canal, résultant du changement de variable. $N(i)$ prend également en compte une éventuelle variation du nombre de coups détectés dans les différents canaux du spectre. $N(i)$ est un réel positif.

La fonction de calibration *f* est une fonction paramétrique, qui peut par exemple être polynomiale ou linéaire. Elle est paramétrée par un ensemble de paramètres. L'ensemble de paramètres comporte au moins un paramètre.

Par exemple, la fonction de calibration est une fonction linéaire, de telle sorte que :

$$f(i) = a + b \times i \quad (2)$$

*a* et *b* étant les paramètres de la fonction.

Le terme de normalisation *N(i)* peut être considéré comme indépendant de chaque canal. Dans ce cas,

$$N(i) = c \quad (2')$$

où c est un réel positif. Le réel c traduit à la fois l'effet de la dilatation des canaux, ainsi qu'une éventuelle variation du nombre de coups détectés dans chaque canal, moyennée sur l'ensemble des canaux.

Dans ce cas :

$$S'_{A,calib}\big(f(i)\big) = \frac{S_{A,calib}(i)}{c} \quad (3)$$

Lorsque le nombre total de coups dans le spectre d'amplitude ne varie pas sous l'effet de l'évolution du gain de conversion, on a *c = b.*

La fonction *f* peut notamment être déterminée par une minimisation d'un écart, ou d'un écart quadratique, entre le spectre d'amplitude de référence et le spectre d'amplitude de calibration recalé par la fonction de calibration. La fonction de calibration est la fonction qui minimise cet écart (ou cet écart quadratique).

Ceci peut être exprimé de telle sorte que :

$$f = argmin \sum_i \left[ \big(S_{A,ref}(i) - N(i)S'_{A,calib}(f(i))\big) \right]^2 \quad (4)$$

La minimisation consiste à déterminer les paramètres de la fonction de calibration f minimisant l'écart entre $S_{A,ref}$ et $S'_{A,\,calib}$.

Dans le cas d'une fonction de calibration linéaire, telle que décrite dans (2),

$$(a,b) = argmin \sum_i \left[ \big(S_{A,ref}(i) - N(i)S'_{A,calib}(f(i))\big) \right]^2 \quad (5)$$

Les étapes 100 à 110 peuvent être mises en oeuvre à différentes reprises, lors de l'utilisation du détecteur, en particulier lors des premières minutes ou premières dizaines de minutes suivant la mise sous tension du détecteur, qui correspondent au fonctionnement instable.

Etape 120 : recalage du spectre de calibration

A la suite de la détermination de la fonction de calibration *f* le spectre d'amplitude de calibration $S_{A,calib}$ peut être recalé de façon à former un spectre d'amplitude de calibration recalé $S'_{A,calib}$, tel que :

$$S'_{A,calib}\big(f(i)\big) = \frac{S_{A,calib}(i)}{c} \quad (5')$$

L'étape 120 est optionnelle. Elle est utile lorsque le procédé met en œuvre une étape 230 décrite ci-après.

L'utilisation du détecteur correspond aux étapes 200 à 220, décrites ci-après :

Etape 200 : disposition d'un objet 20 face au détecteur 30, et, de façon plus générale, face au détecteur pixelisé 30p.

Etape 210 : irradiation de l'objet 20 par la source d'irradiation 10, et acquisition, par tout ou partie des détecteurs 30 formant le détecteur pixelisé 30p, d'un spectre d'amplitude $S_A$ d'un rayonnement 14 transmis par l'objet 20. Le spectre d'amplitude est appelé spectre d'amplitude mesuré.

Etape 220 : prise en compte de la fonction de calibration $f$ pour former un spectre d'amplitude recalé $S'_A$. La fonction de calibration utilisée est la dernière fonction de calibration mise à jour. Le spectre recalé $S'_A$ est tel que :

$$S'_A\big(f(i)\big) = N(i)S_A(i) \qquad (6)$$

Dans le cas d'une fonction de calibration linéaire, préalablement évoquée,

$$S'_A(a + b \times i) = \frac{S_{A,calib}(i)}{c} \qquad (7)$$

Le recalage permet d'obtenir un spectre recalé qui correspondrait au spectre acquis dans le mode de fonctionnement stable du détecteur.

Les étapes 200 à 220 sont répétées. Entre chaque répétition, l'objet 20 à mesurer est déplacé relativement au détecteur 30 ou est remplacé par un autre objet. Entre deux répétitions successives, on peut mettre en œuvre les étapes 100 à 110, de façon à mettre à jour la fonction de calibration utilisée lors de l'étape 220.

Le procédé peut comporter, suite à l'étape 220, une étape 230 de correction de la déformation spectrale, précédemment évoqué en lien avec la figure 2C. Dans cette étape, le spectre d'amplitude mesuré, recalé par la fonction de calibration résultant de l'étape 110, est corrigé à l'aide du spectre d'amplitude de calibration $S'_{A,calib}$ recalé résultant de l'étape 120. Le spectre corrigé $S'_{A,c}$ est tel que :

$$S'_{A,c}(f(i)) = S'_A(f(i)) \times \frac{S_{A,ref}(i)}{S'_{A,calib}(f(i))} \qquad (8)$$

Cette étape revient à appliquer une fonction de correction g au spectre d'amplitude mesuré, de telle sorte que :

$$S'_{A,c}(f(i)) = S'_A(f(i)) \times g(i) = S'_A(f(i)) \times \frac{S_{A,ref}(i)}{S'_{A,calib}(f(i))} \qquad (9)$$

et

$$g(i) = \frac{S_{A,ref}(i)}{S_{A,calib}(f(i))} \qquad (9')$$

Deuxième mode de réalisation.

Comme précédemment mentionné, l'amplitude de chaque impulsion dépend de l'énergie perdue par le rayonnement incident au cours de l'interaction ayant donné lieu à l'impulsion. La relation entre l'amplitude et l'énergie est définie par une fonction de calibration. Il est souvent considéré qu'il s'agit d'une relation linéaire, la fonction de calibration $f$ prenant une forme de type :

$$E_i = f(i) = a + b \times i \qquad (10)$$

où :

- $a$ est un terme représentant l'énergie des photons comptés dans le canal d'indice $i = 0$ ;
- $i$ correspond au numéro d'un canal ;
- $b$ correspond à un terme de gain.

La fonction de calibration est une fonction paramétrique. Lorsqu'elle est linéaire, les paramètres sont : *a* et *b* : *a* est un réel et *b* est un réel strictement positif.

Selon une telle relation l'amplitude *A* d'une impulsion produite par le circuit électronique 32 relié au matériau de détection 31 est proportionnelle à l'énergie *E* perdue par le rayonnement ionisant au cours de son interaction. Lorsque le rayonnement est stoppé dans le matériau détecteur, par effet photoélectrique ou par de multiples diffusions inélastiques, il cède toute son énergie. L'amplitude de l'impulsion collectée est alors proportionnelle à l'énergie du rayonnement incident.

La relation entre amplitude et énergie peut être réalisée est réalisée en irradiant le détecteur à l'aide d'une source d'étalonnage, émettant un rayonnement dont on connaît l'énergie. Il s'agit en particulier d'un rayonnement présentant au moins une discontinuité, ou pic d'énergie, à une valeur connue de l'énergie. Cette opération est usuellement désignée par le terme étalonnage en énergie. Par exemple, dans le cadre de la spectrométrie gamma, on expose le détecteur à une source de type $^{137}$Cs, produisant majoritairement des photons dont l'énergie est de 661,6 keV. On peut également utiliser une source de $^{60}$Co produisant des photons dont l'énergie est majoritairement 1173 keV et 1332 keV. Dans le cadre de la spectrométrie X, on peut utiliser une source de $^{241}$Am ou une source de $^{57}$Co, produisant des photons dont l'énergie majoritaire est respectivement de 59,5 keV et 122 keV. Lors d'un étalonnage en énergie, on acquiert un spectre d'amplitude des signaux mesurés lorsque le détecteur est exposé à un tel rayonnement, puis on attribue arbitrairement les valeurs d'énergies connues aux pics identifiés dans le spectre. Un étalonnage en énergie peut également être effectué en considérant des valeurs d'énergies correspondant à l'émission de rayonnements X de fluorescence par des matériaux irradiés. On peut par exemple considérer des pics de fluorescence correspondant aux matériaux constituant un blindage de la source. Par exemple, le pic de fluorescence X du tungstène (60 keV).

La prise en compte de la fonction de calibration *f* permet, par un changement de variable, d'obtenir un spectre en énergie $S_E$ à partir d'un spectre d'amplitude $S_A$. D'une façon générale,

$$S_E(E_i) = S_E(a + b \times i) = \frac{S_A(i = f^{-1}(E_i))}{b} \quad (11)$$

et

$$S_E(E_i) = 0$$

lorsque $i \leq 0$ ou $i > N_i$

Le changement de variable consiste à passer de *i* à *f(i)* = $E_i$ = *a* + *b* x *i*.

Ainsi, lorsque le détecteur est en fonctionnement, chaque spectre en amplitude $S_A$ est ensuite converti en spectre en énergie $S_E$ en utilisant la fonction de calibration *f* comme décrit ci-dessus.

Le terme spectre en énergie $S_E$ correspond à un histogramme de l'énergie des signaux détectés au cours de la période d'acquisition. Un spectre d'énergie $S_E$ est donc un vecteur, dont chaque terme $S_E(E_i)$ représente une quantité de rayonnement détecté par le détecteur 30 dans une plage d'énergie :

$$E_i \pm \frac{w_i}{2},$$

$w_i$ étant la largeur spectrale de chaque canal. *i* désigne la valeur du canal (ou rang du canal), avec $1 < i \leq N_i$, $N_i$ désignant le nombre de canaux du spectre. $S_E(E_i)$ est le contenu du canal *i*.

La figure 1C représente un spectre en énergie $S_E$ obtenu à partir du spectre en amplitude représenté sur la figure 1B. Sur la figure 1C, l'axe des abscisses correspond à des valeurs de canaux d'énergie *i*, à chaque canal correspondant une énergie $E_i$, et l'axe des ordonnées correspond au nombre d'impulsions (ou nombre de coups) détectées dans chaque canal d'énergie.

La calibration en énergie doit être réalisée sur l'ensemble des détecteurs 30 constituant un détecteur pixelisé $30_p$. En effet, elle fluctue d'un détecteur à un autre, en fonction du rendement de conversion de chaque matériau de détection, et des circuits électroniques associés à chaque détecteur.

Un problème est que du fait de la dérive spectrale observée en lien avec les figures 2A et 2B, la calibration en énergie fluctue, en particulier dans les premières dizaines de minutes, voire dans les premières heures, de la mise sous tension d'un détecteur. Il en résulte une modification de la calibration en énergie du détecteur.

Comme précédemment décrit en lien avec la figure 2C, la dérive spectrale s'accompagne d'une déformation spectrale.

Il n'est pas envisageable d'effectuer, à chaque instant suivant la mise sous tension, une calibration en énergie en se basant sur une exposition du détecteur à un rayonnement comportant des pics dont on connaît l'énergie, comme préalablement expliqué. En effet, le nombre de détecteurs 30 formant un détecteur pixelisé 30p peut atteindre plusieurs centaines, voire plusieurs milliers. Un réétalonnage des détecteurs, selon cette méthode, serait consommateur de temps.

Selon le deuxième mode de réalisation, le procédé peut permettre une calibration en énergie du détecteur, de façon simple et aisément automatisable. Selon ce mode de réalisation, le procédé peut également permettre une correction de la déformation spectrale observée, sur la figure 2C, durant les premiers instants après la mise sous tension du matériau de détection.

Etape 90 : établissement d'une fonction de référence et d'un spectre d'énergie de référence.

Le procédé est basé sur l'utilisation d'un spectre d'énergie de référence $S_{E,ref}$ ainsi que sur une fonction de calibration de référence $f_{ref}$. Le spectre d'énergie de référence $S_{E,ref}$ est formé à partir d'un spectre d'amplitude de référence $S_{A,ref}$ acquis par le détecteur 30 à un instant suffisamment éloigné de la mise sous tension du matériau de détection, pour que l'on puisse considérer que le gain de conversion est stabilisé. Il peut par exemple s'agit d'un instant postérieur, de deux heures, à la mise sous tension. Autrement dit, le spectre d'amplitude de référence est acquis lorsque le détecteur fonctionne selon le régime de fonctionnement stable.

Le spectre d'amplitude de référence est acquis dans les mêmes conditions que dans le premier mode de réalisation.

Dans cet exemple, la fonction de référence $f_{ref}$ est une fonction telle que décrite en lien avec l'expression (10). Elle peut être définie expérimentalement, en exposant le détecteur à un rayonnement composant des pics d'énergie correspondant à des énergies connues.

Ainsi, la fonction de référence est telle que :

$$f_{ref}(i) = a_{ref} + b_{ref} \times i \ (12)$$

$a_{ref}$ et $b_{ref}$ sont les paramètres formant la fonction de référence $f_{ref}$, définis en lien avec (10) : ils représentent respectivement un biais et une largeur des canaux.

A partir de la fonction de référence $f_{ref}$ et du spectre d'amplitude de référence $S_{A,ref}$, on forme un spectre d'énergie de référence $S_{E,ref}$, par un changement de variable tel que décrit en lien avec (11). La figure 3E montre un spectre d'énergie de référence $S_{E,ref}$, l'axe des abscisses représentant des canaux d'énergie, dont la valeur est déterminée à partir de la fonction de référence.

De même que dans le premier mode de réalisation, l'étape 90 peut être effectuée au cours d'une phase préliminaire d'essai du détecteur, ou d'une phase d'utilisation prolongée du détecteur, au cours de laquelle on considère que le détecteur fonctionne selon le mode stable. Les étapes 100 à 120, décrites ci-dessous, correspondent à une mise à jour de la fonction de calibration du détecteur, lors d'une utilisation de ce dernier. Ces étapes visent à ajuster la fonction de calibration du détecteur afin de compenser la dérive du gain de conversion. Elles sont donc de préférence mises en œuvre régulièrement durant les premières dizaines de minutes suivant la mise sous tension, lorsque le gain de conversion est le plus instable.

Etape 100 : Obtention d'un spectre d'énergie de calibration. Cette étape est similaire à l'étape 100 du premier mode de réalisation.

Etape 110 : Mise à jour de la fonction de calibration.

La mise à jour de la fonction de calibration est effectuée de telle sorte que le spectre d'énergie de calibration $S_{E,calib}$ obtenu à partir du spectre d'amplitude de calibration $S_{A,calib}$ et de la fonction de calibration $f$ mise à jour, se rapproche le plus possible du spectre d'énergie de référence $S_{E,ref}$ à un facteur de normalisation près. La fonction de calibration $f$ étant paramétrique, telle que présentée dans (1), la mise à jour consiste à actualiser les paramètres *offset* et $w$. On peut par exemple assimiler la dérive du gain de conversion à un coefficient de dérive $k$, de telle sorte que la fonction de calibration actualisée est telle que :

$$f(i) = a + b \times i = k \times a_{ref} + k \times b_{ref} \times i \ (13)$$

La mise à jour de la fonction de calibration revient à estimer le coefficient de dérive $k$. Cette estimation peut être effectuée en comparant le spectre d'énergie de référence $S_{E,ref}$ au spectre d'énergie de calibration $S_{E,calib}$, ce dernier étant obtenu à partir du spectre d'amplitude de calibration et de la fonction de calibration mise à jour. Le coefficient de dérive $k$ est le coefficient minimisant la comparaison. La comparaison peut prendre la forme d'un écart, par exemple un écart quadratique, ou un ratio. Dans cet exemple, l'écart est un écart quadratique. Ainsi, le coefficient $k$ est tel que :

$$k = \underset{k}{\operatorname{argmin}} \left[ \frac{1}{N_{calib}} S_{E,calib} - \frac{1}{N_{ref}} S_{E,ref} \right]^2 \quad (14)$$

Le spectre $S_{E,calib}$ peut être exprimé comme un vecteur dont chaque terme $S_{E,calib}$ $(E_i)$ est défini à partir du spectre d'amplitude de calibration $S_{A,calib}$ et en utilisant la fonction de calibration mise à jour, de telle sorte que :

$$E_i = f(i) = k \times a_{ref} + k \times b_{ref} \times i \quad (15)$$

Le spectre $S_{E,ref}$ peut être exprimé comme un vecteur dont chaque terme $S_{E,ref}(E_i)$ est défini à partir du spectre d'amplitude de référence $S_{A,ref}$ et en utilisant la fonction de calibration de référence, de telle sorte que :

$$E_i = f_{ref}(i) = a_{ref} + b_{ref} \times i \quad (16)$$

Le terme $\frac{1}{N_{calib}}$ est un terme de normalisation du spectre d'énergie de calibration.

Le terme $\frac{1}{N_{ref}}$ est un terme de normalisation du spectre d'énergie de référence.

Ainsi,

$$k = \underset{k}{\operatorname{argmin}} \sum_{E_i} \left[ \frac{1}{N_{calib}} S_{E,calib}(E_i) - \frac{1}{N_{ref}} S_{E,ref}(E_i) \right]^2 \quad (17)$$

Plusieurs définitions des termes de normalisation peuvent être données.

Selon un premier exemple :

$$\frac{1}{N_{calib}} = \frac{1}{k \times b} \quad (18);$$

et :

$$\frac{1}{N_{ref}} = \frac{1}{b} \quad (18')$$

Selon un deuxième exemple,

$$\frac{1}{N_{calib}} = \max(S_{E,calib}) \quad (19);$$

et :

$$\frac{1}{N_{ref}} = \max(S_{E,ref}) \quad (19')$$

Le terme *max* représente la valeur plus élevée parmi les différents canaux d'énergie du spectre considéré.

Selon un troisième exemple :

$$\frac{1}{N_{calib}} = \sum_{E_i=min}^{E_i=max} S_{E,calib}(E_i) \quad (20);$$

et :

$$\frac{1}{N_{ref}} = \sum_{E_i=Emin}^{E_i=Emax} S_{E,ref}(E_i) \quad (20');$$

$E_{min}$ et $E_{max}$ sont des valeurs d'énergie prédéterminées.

D'une façon plus générale, l'étape 110 revient à mettre à jour la fonction de calibration $f$ de telle façon à minimiser une comparaison entre le spectre d'énergie de calibration, prenant en compte la fonction de calibration, et le spectre d'énergie de référence, prenant en compte la fonction de référence, la comparaison étant effectuée après une normalisation des spectres considérés.

Etape 120 : recalage du spectre de calibration

A la suite de la détermination de $k$, le spectre d'amplitude de calibration $S_{A,calib}$ peut être recalé de façon à former un spectre d'énergie de calibration $S_{E,calib}$, tel que

$$S_{E,calib}(E_i) = S_E\big(k \times a_{ref} + k \times b_{ref} \times i\big) = \frac{S_{A,calib}(i = f^{-1}(E_i))}{kb_{ref}} \quad (21)$$

L'étape 120 est optionnelle.

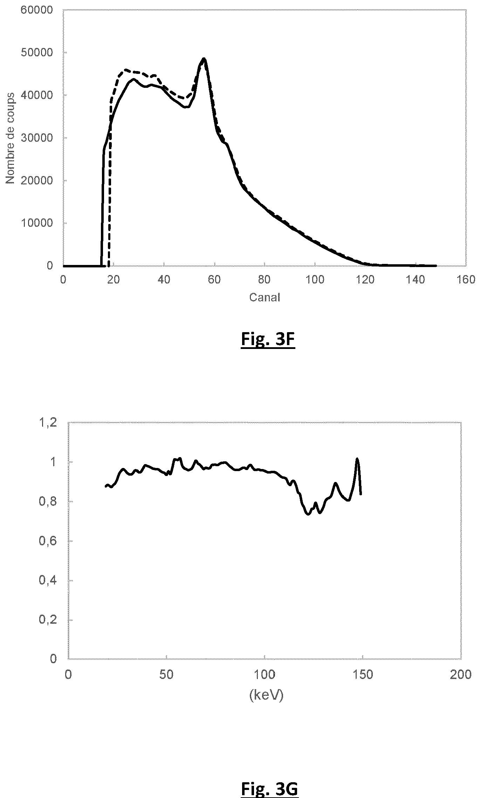

La figure 3F montre le spectre d'énergie de référence (en trait plein) ainsi que le spectre d'énergie de calibration (en pointillés), ce dernier étant obtenu après recalage du spectre d'amplitude de calibration en tenant compte de la fonction de calibration mise à jour.

Les étapes 100 à 110 ou 120 peuvent être mises en œuvre à différentes reprises, lors de l'utilisation du détecteur. L'utilisation du détecteur correspond aux étapes 200 à 220, décrites ci-après :

Etape 200 : disposition d'un objet 20 face au détecteur 30, et, de façon plus générale, face au détecteur pixelisé 30p.

Etape 210 : irradiation de l'objet 20 par la source d'irradiation 10, et acquisition, par tout ou partie des détecteurs 30 formant le détecteur pixelisé 30p, d'un spectre d'amplitude $S_A$ d'un rayonnement 14 transmis par l'objet 20. Le spectre d'amplitude est appelé spectre d'amplitude mesuré.

Etape 220 : prise en compte d'une fonction de calibration $f$ pour former un spectre d'énergie mesuré $S_E$. La fonction de calibration utilisée est la dernière fonction de calibration mise à jour.

Les étapes 200 à 220 sont répétées. Entre chaque répétition, l'objet 20 est déplacé relativement au détecteur 30 ou est remplacé par un autre objet. Entre deux répétitions successives, on peut mettre en œuvre les étapes 100 à 110, de façon à mettre à jour la fonction de calibration utilisée lors de l'étape 220.

Juste après la mise sous tension du matériau de détection 31, on peut mettre en œuvre les étapes 100 à 110, de façon à estimer une fonction de calibration initiale, basée sur une fonction de référence préalablement stockée en mémoire. Puis, les étapes 100 à 110 sont renouvelées, en particulier dans les premières dizaines de minutes d'utilisation. La fréquence de renouvellement peut être importante durant ces premières dizaines de minutes, avec par exemple une mise à jour de la fonction de calibration toutes les 5 minutes. La fréquence de renouvellement peut ensuite diminuer progressivement, jusqu'à ce que le détecteur soit considéré comme stabilisé.

Ainsi, l'invention permet d'effectuer une mise à jour de la fonction de calibration par une simple exposition du détecteur au rayonnement de calibration 14c. Tous les détecteurs formant un même détecteur pixelisé peuvent faire l'objet d'une mise à jour simultanée de leurs fonctions de calibrations respectives, ce qui constitue un avantage notable de l'invention. Ainsi, les valeurs d'énergies constituant les spectres en énergie sont reproductibles, et cela indépendamment de l'instant d'acquisition du spectre par rapport à l'instant de mise sous tension du détecteur.

Le procédé peut comporter, suite à l'étape 220, une étape 230 de correction de la déformation spectrale. Dans cette étape, le spectre d'énergie mesuré, recalé par la fonction de calibration résultant de l'étape 110, est corrigé à l'aide du spectre d'énergie de calibration $S_{E,calib}$ résultant de l'étape 120. Le spectre corrigé $S_{E,c}$ est tel que :

$$S_{E,c}(E_i) = S_E(E_i) \times \frac{S_{E,ref}(E_i)}{S_{E,calib}(E_i)} \quad (22)$$

Cette étape revient à appliquer une fonction de correction $g$ au spectre d'énergie mesuré, de telle sorte que :

$$S_{E,c}(E_i) = S_E(E_i) \times g(E_i) = S_E(E_i) \times \frac{S_{E,ref}(E_i)}{S_{E,calib}(E_i)} \quad (23)$$

et

$$g(E_i) = \frac{S_{E,ref}(E_i)}{S_{E,calib}(E_i)} \quad (24)$$

La figure 3G représente un exemple de fonction de correction $g$. L'axe des abscisses représente les énergies, tandis que l'axe des ordonnées montre la valeur de la fonction de correction.

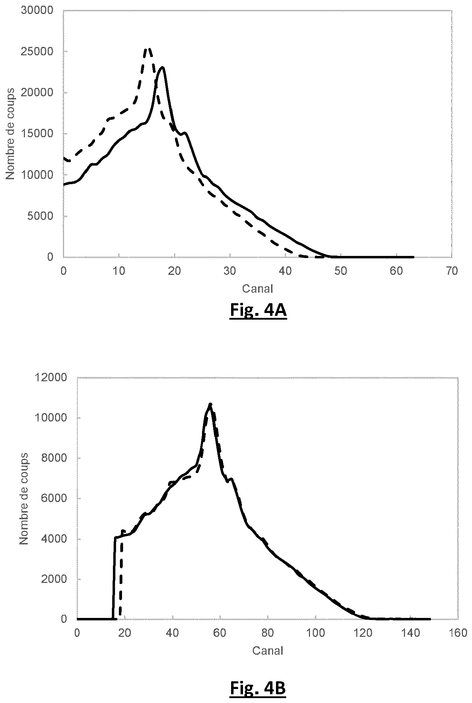

Le procédé tel que précédemment décrit a été mis en œuvre en effectuant une calibration en disposant un objet de calibration 20c entre la source d'irradiation 11 et chaque détecteur 30 d'un détecteur pixelisé 30p. L'objet de calibration était une plaque d'aluminium d'épaisseur 30 mm. Sur la figure 4A, on a représenté un spectre d'amplitude de référence (en trait plein) et un spectre d'amplitude de calibration (en pointillés). Le spectre d'amplitude de référence $S_{A,ref}$ correspond à un spectre d'amplitude acquis 2 heures après la mise sous tension du matériau de détection, toujours avec l'objet de calibration entre la source et le détecteur. Le spectre d'amplitude de calibration $S_{A,calib}$ a été acquis 2 minutes après la mise sous tension du matériau de détection. La comparaison des deux spectres permet d'apprécier la dérive de la conversion amplitude/énergie.

On a mis à jour la fonction de calibration, et obtenu un spectre d'énergie de calibration $S_{E,calib}$, ce dernier étant obtenu en appliquant un changement de variable au spectre d'amplitude $S_{A,calib}$ de calibration, en prenant en compte la fonction de calibration mise à jour. Sur la figure 4B, on a représenté le spectre d'énergie de calibration $S_{E,calib}$ ainsi obtenu, en pointillés. On a également représenté le spectre d'énergie de référence $S_{E,ref}$, ce dernier étant obtenu en appliquant une fonction de calibration de référence au spectre d'amplitude de référence $S_{A,ref}$.

Comme préalablement décrit, la fonction de référence peut être obtenue en exposant le détecteur à des rayonnements connus, présentant de préférence des pics d'énergie bien identifiés. De façon alternative, la fonction de référence peut être modélisée, par une modélisation fine de la réponse du détecteur. La réponse d'un détecteur spectrométrique peut être modélisée par une fonction de réponse, cette dernière pouvant représentée sous une forme matricielle.

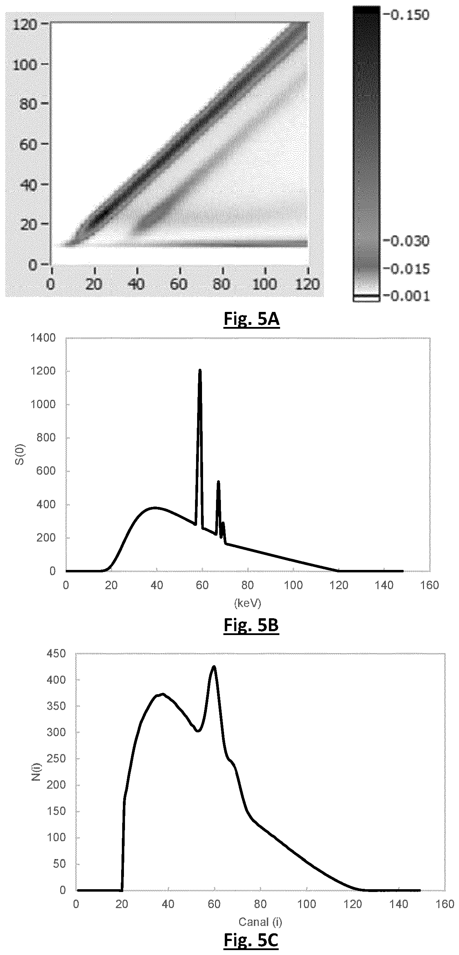

La figure 5A illustre un exemple de matrice de réponse $R$ du détecteur. Elle représente les imperfections de la détection. Cette matrice est de taille $NxN$, $N$ désignant le nombre de canaux de chaque spectre formé par le détecteur. Dans cet exemple, $N = 120$, mais de façon générale, le nombre de canaux est supérieur à 2, voire supérieur à 10, et peut atteindre plusieurs milliers. Chaque terme $R(E_j, E_i)$ de cette matrice représente une probabilité qu'un photon incident au détecteur, d'énergie $E_j$, soit considéré par le détecteur comme ayant une énergie $E_i$.

Autrement dit, chaque ligne $R(., E_j)$ de la matrice $R$ correspond à une distribution de probabilité de l'énergie $E_j$ d'un photon atteignant le détecteur lorsqu'un photon d'énergie $E_j$ est détecté. De façon analogue, chaque colonne $R(E_j, .)$ de la matrice représente une distribution de probabilité de l'énergie détectée $E_j$ par le détecteur lorsque le photon atteignant le détecteur a une énergie $E_i$.

Une telle matrice permet une simulation d'un spectre d'énergie de référence $S_{ref,E}$ selon l'expression suivante :

$$S_{E,ref}(E_i) = \sum_j S(E_j) R(E_j, E_i) \quad (25)$$

La figure 5B correspond à un spectre modélisé d'un rayonnement 12 émis par une source d'irradiation. La figure 5C correspond à un spectre simulé par une prise en compte de la matrice de réponse du détecteur.

Selon une variante, lorsque, suite, à l'étape 110, on obtient une estimation du coefficient de dérive $k$, la tension de polarisation $V$ du matériau de détection 31 peut être ajustée en fonction du coefficient de dérive. Selon ce mode de réalisation, $V_{ref}$ correspond à une valeur de tension de polarisation de référence, permettant, passé la durée de stabilisation du détecteur, l'acquisition du spectre de référence durant l'étape 90. Lors de l'utilisation du détecteur (étapes 200 et 210), on pondère la tension de tension de polarisation du matériau de détection de telle sorte que :

$$V = k \times V_{ref} \quad (26)$$

Selon un tel mode de réalisation, la fonction de calibration est inchangée : elle correspond à la fonction de calibration de référence. La dérive du détecteur est prise en compte non pas en modulant la fonction de calibration, mais en modulant la tension de polarisation du matériau de détection.

L'invention pourra s'appliquer dans détecteurs formant des détecteur pixelisés mis en œuvre dans différentes applications d'imagerie spectrale mettant en œuvre des rayonnements ionisants, en particulier des rayonnements X ou gamma, pour des applications médicales ou plus généralement, dans le contrôle non destructif d'objets, visant à investiguer la structure interne dudit objet. L'objet peut être, par exemple, un bagage, un produit industriel, un élément de structure d'une installation, par exemple une tuyauterie, un déchet nucléaire.

## Revendications

1. Procédé de calibration d'un détecteur spectrométrique (30), le détecteur spectrométrique étant configuré pour :

   • détecter des interactions d'un rayonnement ionisant dans un matériau de détection (31) durant une durée d'acquisition ;
   • acquérir un spectre d'amplitude ($S_A$) correspondant à un histogramme d'amplitudes d'impulsions détectées lors des interactions ;

   le détecteur spectrométrique fonctionnant selon un mode instable, durant une période temporelle d'instabilité suivant une mise sous tension du matériau de détection, puis tendant progressivement vers un mode de fonctionnement stable ; le procédé comportant l'étape suivante :

   a) exposition du détecteur (30) à un rayonnement de calibration (14c), et acquisition d'un spectre d'amplitude de calibration ($S_{A,calib}$), le détecteur étant considéré comme fonctionnant selon le mode instable, le spectre de calibration s'étendant selon plusieurs canaux, à chaque canal correspondant une valeur d'amplitude ;

   le procédé étant **caractérisé en ce qu'**il comprend en outre les étapes suivantes:

   b) prise en compte d'un spectre de référence ($S_{A,ref}$, $S_{E,ref}$), représentatif d'un spectre mesuré par le détecteur lorsqu'il est exposé au rayonnement de calibration, le détecteur étant considéré comme fonctionnant selon le mode stable;
   c) détermination d'une fonction de calibration ($f$), destinée à être appliquée à la valeur des canaux du spectre de calibration ($S_{A,calib}$), à partir d'une comparaison entre :

   - le spectre de référence ($S_{A,ref}$, $S_{E,ref}$) pris en compte lors de l'étape b) ;
   - un spectre de calibration recalé ($S_{A,calib}$, $S_{E,calib}$), obtenu en appliquant la fonction de calibration ($f$) à la valeur des canaux du spectre d'amplitude de calibration, éventuellement pondéré par un terme de pondération ($c$) strictement positif ;

   la fonction de calibration minimisant un écart, ou un écart quadratique, entre le spectre de référence et le spectre de calibration recalé.

2. Procédé selon la revendication 1, dans lequel la fonction de calibration est paramétrique, en étant définie par un ensemble de paramètres ($a,b$), au moins un paramètre étant déterminé par la minimisation de la comparaison effectuée lors de l'étape c).

3. Procédé selon l'une quelconque des revendications précédentes, dans lequel lors de l'étape b), le spectre de référence est un spectre d'amplitude, formant un spectre d'amplitude de référence ($S_{A,ref}$), chaque canal du spectre d'amplitude de référence étant assigné à une valeur d'amplitude d'une impulsion détectée par le détecteur, exposé au rayonnement de calibration, le spectre de d'amplitude référence étant soit mesuré, soit modélisé.

**4.** Procédé selon l'une quelconque des revendications 1 et 2, dans lequel lors de l'étape b), le spectre de référence est un spectre d'énergie, formant un spectre d'énergie de référence ($S_{E,ref}$), chaque canal du spectre d'énergie de référence étant assigné à une valeur d'énergie correspondant à une impulsion détectée par le détecteur, exposé au rayonnement de calibration, le spectre d'énergie de référence étant soit mesuré, soit modélisé.

**5.** Procédé selon la revendication 4, dans lequel :

- lors de l'étape b), le spectre d'énergie de référence ($S_{E,ref}$) est obtenu en appliquant une fonction de calibration de référence ($f_{ref}$) à un spectre d'amplitude de référence ($S_{A,ref}$), la fonction de calibration de référence définissant une relation entre l'amplitude de chaque impulsion détectée par le détecteur et une valeur d'énergie, la fonction de calibration de référence, permettant de passer du spectre d'amplitude de référence à un spectre d'énergie de référence ;
- le spectre d'amplitude de référence est soit mesuré, soit modélisé ;
- lors de l'étape c), le spectre de calibration recalé est un spectre d'énergie de calibration ($S_{E,calib}$);

**6.** Procédé selon la revendication 4, dans lequel :

- le spectre d'énergie de référence ($S_{E,ref}$) est issu d'une modélisation ;
- la modélisation définissant également une fonction de calibration de référence, définissant une relation entre l'amplitude de chaque impulsion détectée par le détecteur et une valeur d'énergie ;
- lors de l'étape c), le spectre de calibration recalé est un spectre d'énergie de calibration ($S_{E,calib}$).

**7.** Procédé selon l'une quelconque des revendications 5 ou 6, dans lequel :

- la fonction de calibration de référence ($f_{ref}$) est une fonction paramétrique, définie par un ensemble de paramètres de référence ($a_{ref}$, $b_{ref}$) comportant au moins un paramètre de référence ;
- lors de l'étape c), le spectre d'amplitude calibration ($S_{A,calib}$) est recalé à l'aide de la fonction de calibration de référence, en pondérant au moins un paramètre de référence par un coefficient de dérive ($k$);
- de telle sorte que l'étape c) comporte une détermination du coefficient de dérive, résultant de la comparaison.

**8.** Procédé selon l'une quelconque des revendications 5 à 7, dans lequel la fonction de calibration de référence est une fonction linéaire.

**9.** Procédé selon l'une quelconque des revendications 5, 7 ou 8, dans lequel le spectre d'amplitude de référence ($S_{A,ref}$) est un spectre acquis par le détecteur en exposant ce dernier au rayonnement de calibration ($12_c$), le détecteur étant considéré comme en mode stable lors de l'exposition.

**10.** Procédé selon l'une quelconque des revendications précédentes, comprenant une étape d) comportant :

- une exposition du détecteur à un rayonnement de mesure (14);
- une acquisition d'un spectre d'amplitude ($S_A$) du rayonnement de mesure, dit spectre d'amplitude mesuré ;
- un recalage du spectre d'amplitude, en utilisant la fonction de calibration déterminée lors de l'étape c), pour former un spectre d'amplitude recalé ($S'_A$).

**11.** Procédé selon la revendication 10, dépendant de l'une quelconque des revendications 1 à 3, dans lequel lors de l'étape d), le procédé comprend une étape e) comportant :

- utilisation de la fonction de calibration mise à jour lors de l'étape c) et du spectre d'amplitude de calibration ($S_{A,calib}$) pour établir un spectre d'amplitude de calibration recalé ($S'_{A,calib}$) ;
- correction du spectre d'amplitude mesuré ($S_A$) à partir du spectre d'amplitude de calibration recalé ($S'_{A,calib}$) et du spectre d'amplitude de référence ($S_{A,ref}$).

**12.** Procédé selon la revendication 10, dépendant d'une quelconque des revendications 4 à 9, dans lequel lors de l'étape d), le spectre d'amplitude recalé ($S_A$) est un spectre d'énergie mesuré ($S_E$), le procédé comprenant une étape e) comportant :

- utilisation de la fonction de calibration mise à jour lors de l'étape c) et du spectre d'amplitude de calibration ($S_{A,calib}$) pour établir un spectre d'énergie de calibration ($S_{E,calib}$) ;

- correction du spectre d'énergie mesuré ($S_E$) à partir du spectre d'énergie de calibration ($S_{E,caub}$) et du spectre d'énergie de référence ($S_{E,ref}$).

13. Procédé selon la revendication 12, dans lequel la correction est réalisée en multipliant, à chaque énergie ($E_i$), le contenu de chaque canal du spectre d'énergie mesuré ($S_E$) par un ratio entre les contenus respectifs du spectre d'énergie de calibration ($S_{E,calib}$) et du spectre d'énergie de référence ($S_{E,ref}$).

14. Procédé selon la revendication 7, comportant :

   • une exposition du détecteur à un rayonnement de mesure (14);
   • une acquisition d'un spectre d'amplitude ($S_A$) du rayonnement de mesure ;

   de telle sorte que durant l'acquisition du spectre d'amplitude, le matériau de détection (31) est mis sous tension une tension de polarisation (V), ajustée en fonction du coefficient de dérive ($k$).

15. Dispositif (1) de caractérisation d'un objet (20) comportant :

   • une source d'irradiation (10), configurée pour émettre un rayonnement électromagnétique ionisant ;
   • un détecteur spectrométrique (30), configuré pour détecter un rayonnement électromagnétique ionisant ayant été diffusé par l'objet (20) ou s'étant propagé à travers l'objet (20), et à former un spectre du rayonnement détecté ;
   • un processeur (40), configuré pour recevoir les spectres formés par le détecteur et pour mettre en œuvre les étapes b) et c) d'un procédé selon l'une quelconque des revendications précédentes.

16. Dispositif selon la revendication 15, comportant une pluralité de détecteurs (30) formant un détecteur pixelisé (30p), le processeur étant configuré pour mettre en œuvre simultanément, pour tout ou partie des détecteurs (30) les étapes b) et c).

**Patentansprüche**

1. Verfahren zur Kalibrierung eines spektrometrischen Detektors (30), wobei der spektrometrische Detektor für Folgendes konfiguriert ist:

   • Detektieren von Wechselwirkungen einer ionisierenden Strahlung in einem Detektionsmaterial (31) während eines Erfassungszeitraums;
   • Erfassen eines Amplitudenspektrums ($S_A$), das einem Amplitudenhistogramm von während der Wechselwirkungen detektierten Impulsen entspricht;

   wobei der spektrometrische Detektor während einer Zeitperiode der Instabilität, die auf das Anlegen einer Spannung an das Detektionsmaterial folgt, in einem instabilen Modus arbeitet und dann schrittweise zu einem stabilen Betriebsmodus übergeht; wobei das Verfahren den folgenden Schritt umfasst:

   a) Aussetzen des Detektors (30) gegenüber einer Kalibrierstrahlung (14c) und Erfassen eines Kalibrieramplitudenspektrums ($S_{A,calib}$), wobei der Detektor als im instabilen Modus arbeitend betrachtet wird, wobei sich das Kalibrierspektrum über mehrere Kanäle erstreckt, wobei jedem Kanal ein Amplitudenwert entspricht;

   wobei das Verfahren **dadurch gekennzeichnet ist, dass** es ferner die folgenden Schritte beinhaltet:

   b) Berücksichtigen eines Referenzspektrums ($S_{A,ref}$, $S_{E,ref}$), das für ein Spektrum repräsentativ ist, das durch den Detektor gemessen wird, wenn er der Kalibrierstrahlung ausgesetzt wird, wobei der Detektor als im stabilen Modus arbeitend betrachtet wird;
   c) Bestimmen einer Kalibrierfunktion ($f$), die dazu bestimmt ist, auf den Wert der Kanäle des Kalibrierspektrums ($S_{A,calib}$) angewendet zu werden, anhand eines Vergleichs zwischen:

      - dem in Schritt b) berücksichtigten Referenzspektrum ($S_{A,ref}$, $S_{E,ref}$);
      - einem angepassten Kalibrierspektrum ($S_{A,calib}$, $S_{E,calib}$), das durch das Anwenden der Kalibrierfunktion ($f$) auf den Wert der Kanäle des Kalibrieramplitudenspektrums erhalten wird, eventuell gewichtet um einen strikt positiven Gewichtungsfaktor (*c*),

wobei die Kalibrierfunktion eine Abweichung oder eine quadratische Abweichung zwischen dem Referenzspektrum und dem angepassten Kalibrierspektrum minimiert.

2. Verfahren nach Anspruch 1, wobei die Kalibrierfunktion parametrisch ist und durch einen Satz von Parametern (*a, b*) definiert wird, wobei mindestens ein Parameter durch die Minimierung des in Schritt c) durchgeführten Vergleichs bestimmt wird.

3. Verfahren nach einem der vorhergehenden Ansprüche, wobei in Schritt b) das Referenzspektrum ein Amplitudenspektrum ist, das ein Referenzamplitudenspektrum ($S_{A,ref}$) bildet, wobei jeder Kanal des Referenzamplitudenspektrums einem Amplitudenwert eines Impulses, der durch den Detektor, der der Kalibrierstrahlung ausgesetzt wird, detektiert wird, zugeordnet wird, wobei das Referenzamplitudenspektrum entweder gemessen oder modelliert wird.

4. Verfahren nach einem der Ansprüche 1 und 2, wobei in Schritt b) das Referenzspektrum ein Energiespektrum ist, das ein Referenzenergiespektrum ($S_{E,ref}$) bildet, wobei jeder Kanal des Referenzenergiespektrums einem Energiewert zugeordnet wird, der einem Impuls entspricht, der durch den Detektor, der der Kalibrierstrahlung ausgesetzt wird, detektiert wird, wobei das Referenzenergiespektrum entweder gemessen oder modelliert wird.

5. Verfahren nach Anspruch 4, wobei:

   - in Schritt b) das Referenzenergiespektrum ($S_{E,ref}$) durch das Anwenden einer Referenzkalibrierfunktion ($f_{ref}$) auf ein Referenzamplitudenspektrum ($S_{A,ref}$) erhalten wird, wobei die Referenzkalibrierfunktion eine Beziehung zwischen der Amplitude jedes durch den Detektor detektierten Impulses und einem Energiewert definiert, wobei die Referenzkalibrierfunktion gestattet, von dem Referenzamplitudenspektrum zu einem Referenzenergiespektrum zu gelangen;
   - das Referenzamplitudenspektrum entweder gemessen oder modelliert wird;
   - in Schritt c) das angepasste Kalibrierspektrum ein Kalibrierenergiespektrum ($S_{E,calib}$) ist.

6. Verfahren nach Anspruch 4, wobei:

   - das Referenzenergiespektrum ($S_{E,ref}$) aus einer Modellierung stammt;
   - die Modellierung ebenfalls eine Referenzkalibrierfunktion definiert, die eine Beziehung zwischen der Amplitude jedes durch den Detektor detektierten Impulses und einem Energiewert definiert;
   - in Schritt c) das angepasste Kalibrierspektrum ein Kalibrierenergiespektrum ($S_{E,calib}$) ist.

7. Verfahren nach einem der Ansprüche 5 oder 6, wobei:

   - die Referenzkalibrierfunktion ($f_{ref}$) eine parametrische Funktion ist, die durch einen Satz von Referenzparametern ($a_{ref}, b_{ref}$) definiert wird, der mindestens einen Referenzparameter umfasst;
   - in Schritt c) das Kalibrieramplitudenspektrum ($S_{A,calib}$) mit Hilfe der Referenzkalibrierfunktion angepasst wird, indem mindestens ein Referenzparameter um einen Abweichungskoeffizienten (*k*) gewichtet wird;
   - sodass der Schritt c) eine Bestimmung des Abweichungskoeffizienten umfasst, der sich aus dem Vergleich ergibt.

8. Verfahren nach einem der Ansprüche 5 bis 7, wobei die Referenzkalibrierfunktion eine lineare Funktion ist.

9. Verfahren nach einem der Ansprüche 5, 7 oder 8, wobei das Referenzamplitudenspektrum ($S_{A,ref}$) ein Spektrum ist, das durch den Detektor erfasst wird, indem dieser der Kalibrierstrahlung ($12_c$) ausgesetzt wird, wobei der Detektor während der Aussetzung als im stabilen Modus befindlich betrachtet wird.

10. Verfahren nach einem der vorhergehenden Ansprüche, das einen Schritt d) beinhaltet, der Folgendes umfasst:

   • Aussetzen des Detektors gegenüber einer Messstrahlung (14);
   • Erfassen eines Amplitudenspektrums ($S_A$) der Messstrahlung, als gemessenes Amplitudenspektrum bezeichnet;
   • Anpassen des Amplitudenspektrums unter Verwendung der Kalibrierfunktion, die in Schritt c) bestimmt wurde, um ein angepasstes Amplitudenspektrum ($S'_A$) zu bilden.

**11.** Verfahren nach Anspruch 10 in Abhängigkeit von einem der Ansprüche 1 bis 3, wobei das Verfahren in Schritt d) einen Schritt e) beinhaltet, der Folgendes umfasst:

- Verwenden der in Schritt c) aktualisierten Kalibrierfunktion und des Kalibrieramplitudenspektrums ($S_{A,calib}$), um ein angepasstes Kalibrieramplitudenspektrum ($S_{A,calib}$) zu erstellen;
- Korrigieren des gemessenen Amplitudenspektrums ($S_A$) anhand des angepassten Kalibrieramplitudenspektrums ($S_{A,calib}$) und des Referenzamplitudenspektrums ($S_{A,ref}$).

**12.** Verfahren nach Anspruch 10 in Abhängigkeit von einem der Ansprüche 4 bis 9, wobei in Schritt d) das angepasste Amplitudenspektrum ($S_A$) ein gemessenes Energiespektrum ($S_E$) ist, wobei das Verfahren einen Schritt e) beinhaltet, der Folgendes umfasst:

- Verwenden der in Schritt c) aktualisierten Kalibrierfunktion und des Kalibrieramplitudenspektrums ($S_{A,calib}$), um ein Kalibrierenergiespektrum ($S_{E,calib}$) zu erstellen;
- Korrigieren des gemessenen Energiespektrums ($S_E$) anhand des Kalibrierenergiespektrums ($S_{E,calib}$) und des Referenzenergiespektrums ($S_{E,ref}$).

**13.** Verfahren nach Anspruch 12, wobei das Korrigieren durchgeführt wird, indem bei jeder Energie ($E_i$) der Inhalt jedes Kanals des gemessenen Energiespektrums ($S_E$) mit einem Verhältnis zwischen den jeweiligen Inhalten des Kalibrierenergiespektrums ($S_{E,calib}$) und des Referenzenergiespektrums ($S_{E,ref}$) multipliziert wird.

**14.** Verfahren nach Anspruch 7, das Folgendes umfasst:

• Aussetzen des Detektors gegenüber einer Messstrahlung (14);
• Erfassen eines Amplitudenspektrums ($S_A$) der Messstrahlung;

derart, dass während des Erfassens des Amplitudenspektrums eine Spannung an das Detektionsmaterial (31) eine Polarisationsspannung (V) angelegt wird, die in Abhängigkeit von dem Abweichungskoeffizienten ($k$) justiert wird.

**15.** Vorrichtung (1) zur Charakterisierung eines Objekts (20), die Folgendes umfasst:

• eine Bestrahlungsquelle (10), die dazu konfiguriert ist, eine ionisierende elektromagnetische Strahlung abzugeben;
• einen spektrometrischen Detektor (30), der dazu konfiguriert ist, eine ionisierende elektromagnetische Strahlung, die durch das Objekt (20) ausgesendet wurde oder die sich durch das Objekt (20) fortgepflanzt hat, zu detektieren und ein Spektrum der detektierten Strahlung zu bilden;
• einen Prozessor (40), der dazu konfiguriert ist, die durch den Detektor gebildeten Spektren zu empfangen und die Schritte b) und c) eines Verfahrens nach einem der vorhergehenden Ansprüche umzusetzen.

**16.** Vorrichtung nach Anspruch 15, die eine Vielzahl von Detektoren (30) umfasst, die einen pixelierten Detektor (30p) bilden, wobei der Prozessor dazu konfiguriert ist, die Schritte b) und c) gleichzeitig für alle oder einen Teil der Detektoren (30) umzusetzen.

**Claims**

**1.** Method for calibrating a spectrometry detector (30), the spectrometry detector being configured to:

• detect interactions of an ionising radiation in a detection material (31) during an acquisition duration;
• acquire an amplitude spectrum ($S_A$) corresponding to a histogram of amplitudes of pulses detected during the interactions;

the spectrometry detector operating according to an unstable mode during an instability time period following application of voltage to the detection material, then tending progressively towards a stable operating mode; the method including the following step:

a) exposing the detector (30) to a calibration radiation (14c) and acquisition of a calibration amplitude spectrum ($S_{A,calib}$), the detector being assumed to be operating according to the unstable mode, the calibration spectrum extending over a plurality of channels, one amplifier value corresponding to each channel;

the method being **characterized in that** it furthermore comprises the following steps:

b) taking into account a reference spectrum ($S_{A,ref}$, $S_{E,ref}$) representing a spectrum measured by the detector when it is exposed to the calibration radiation, the detector being assumed to be operating according to the stable mode;
c) determining a calibration function ($f$), intended to be applied to the value of the channels of the calibration spectrum ($S_{A,calib}$), on the basis of a comparison between:

- the reference spectrum ($S_{A,ref}$, $S_{E,ref}$) taken into account during step b);
- readjusted calibration spectrum ($S_{A,calib}$, $S_{E,calib}$), obtained by applying the calibration function ($f$) to the value of the channels of the calibration amplitude spectrum, optionally weighted by a strictly positive weighting term ($c$);

the calibration function minimising a deviation, or a mean square deviation, between the reference spectrum and the readjusted calibration spectrum.

2. Method according to Claim 1, wherein the calibration function is parametric, being defined by a set of parameters ($a,b$), at least one parameter being determined by minimisation of the comparison carried out during step c).

3. Method according to either of the preceding claims, wherein, during step b), the reference spectrum is an amplitude spectrum forming a reference amplitude spectrum ($S_{A,ref}$), each channel of the reference amplitude spectrum being assigned to an amplitude value of a pulse detected by the detector when exposed to the calibration radiation, the reference amplitude spectrum being either measured or modelled.

4. Method according to either of Claims 1 and 2, wherein, during step b), the reference spectrum is an energy spectrum forming a reference energy spectrum ($S_{E,ref}$), each channel of the reference energy spectrum being assigned to an energy value corresponding to a pulse detected by the detector when exposed to the calibration radiation, the reference energy spectrum being either measured or modelled.

5. Method according to Claim 4, wherein:

- during step b), the reference energy spectrum ($S_{E,ref}$) is obtained by applying a reference calibration function ($f_{ref}$) to a reference amplitude spectrum ($S_{A,ref}$), the reference calibration function defining a relation between the amplitude of each pulse detected by the detector and an energy value, the reference calibration function making it possible to change from the reference amplitude spectrum to a reference energy spectrum;
- the reference amplitude spectrum is either measured or modelled;
- during step c), the readjusted calibration spectrum is a calibration energy spectrum ($S_{E,calib}$).

6. Method according to Claim 4, wherein:

- the reference energy spectrum ($S_{E,ref}$) is the result of modelling;
- the modelling also defining a reference calibration function defining a relation between the amplitude of each pulse detected by the detector and an energy value;
- during step c), the readjusted calibration spectrum is a calibration energy spectrum ($S_{E,calib}$).

7. Method according to either of Claims 5 or 6, wherein:

- the reference calibration function ($f_{ref}$) is a parametric function defined by a set of reference parameters ($a_{ref}$, $b_{ref}$) including at least one reference parameter;
- during step c), the calibration amplitude spectrum ($S_{A,calib}$) is readjusted with the aid of the reference calibration function, while weighting at least one reference parameter with a drift coefficient ($k$);
- so that step c) includes a determination of the drift coefficient resulting from the comparison.

8. Method according to any one of Claims 5 to 7, wherein the reference calibration function is a linear function.

9. Method according to any one of Claims 5, 7 or 8, wherein the reference amplitude spectrum ($S_{A,ref}$) is a spectrum acquired by the detector while exposing the latter to the calibration radiation ($12_c$), the detector being assumed to be in a stable mode during the exposure.

10. Method according to any one of the preceding claims, comprising a step d) including:

• exposing the detector to measurement radiation (14);
• acquiring an amplitude spectrum ($S_A$) of the measurement radiation, referred to as the measured amplitude spectrum;
• readjusting the amplitude spectrum by using the calibration function determined during step c) in order to form a readjusted amplitude spectrum ($S'_A$).

11. Method according to Claim 10, dependent on any one of Claims 1 to 3, wherein, during step d), the method comprises a step e) including:

- using the calibration function updated during step c) and the calibration amplitude spectrum ($S_{A,calib}$) in order to establish a readjusted calibration amplitude spectrum ($S'_{Acalib}$);
- correcting the measured amplitude spectrum ($S_A$) on the basis of the readjusted calibration amplitude spectrum ($S'_{A,calib}$) and the reference amplitude spectrum ($S_{A,ref}$).

12. Method according to Claim 10, dependent on any one of Claims 4 to 9, wherein, during step d), the readjusted amplitude spectrum ($S'_A$) is a measured energy spectrum ($S_E$), the method comprising a step e) including:

- using the calibration function updated during step c) and the calibration amplitude spectrum ($S_{A,calib}$) in order to establish a calibration energy spectrum ($S_{E,calib}$);
- correcting the measured energy spectrum ($S_E$) on the basis of the calibration energy spectrum ($S_{E,calib}$) and the reference energy spectrum ($S_{E,ref}$).

13. Method according to Claim 12, wherein the correction is carried out by multiplying, for each energy ($E_i$), the content of each channel of the measured energy spectrum ($S_E$) by a ratio between the respective contents of the calibration energy spectrum ($S_{E,calib}$) and the reference energy spectrum ($S_{E,ref}$).

14. Method according to Claim 7, including:

• exposing the detector to measurement radiation (14);
• acquiring an amplitude spectrum ($S_A$) of the measurement radiation;

so that during the acquisition of the amplitude spectrum, the detection material (31) is placed under voltage a bias voltage (V) adjusted as a function of the drift coefficient ($k$).

15. Device (1) for characterising an object (20), including:

• an irradiation source (10) configured to emit an ionising electromagnetic radiation;
• a spectrometry detector (30) configured to detect an ionising electromagnetic radiation that has been scattered by the object (20) or has propagated through the object (20), and form a spectrum of the detected radiation;
• a processor (40) configured to receive the spectra formed by the detector and to carry out steps b) and c) of a method according to any one of the preceding claims.

16. Device according to Claim 15, including a plurality of detectors (30) forming a pixelated detector (30p), the processor being configured to carry out steps b) and c) simultaneously for all or some of the detectors (30).

**Fig. 1A**

**Fig. 1B**

**Fig. 1C**

**Fig. 2A**

**Fig. 2B**

**Fig. 2C**

$$S_{E,ref}, f_{ref}$$

$$S_{A,calib}$$

$$f$$

$$S_{E,calib}$$

$$S_A$$

$$S_E$$

$$S'_E$$

**Fig. 3A**

**Fig. 3B**

**Fig. 3C**

**Fig. 3D**

**Fig. 3E**

**Fig. 3F**

**Fig. 3G**

**Fig. 4A**

**Fig. 4B**

Fig. 5A

Fig. 5B

Fig. 5C

**RÉFÉRENCES CITÉES DANS LA DESCRIPTION**

**Documents brevets cités dans la description**

- EP 3385757 A

- EP 3185003 A

**Littérature non-brevet citée dans la description**

- **CESARE C et al.** An FPGA-based algorithm to correct the instability of high-resolution and high-flux X-ray spectroscopic imaging detectors. *Journal of instrumentation,* 28 Août 2018, vol. 13 (08